# EUROPEAN PATENT SPECIFICATION

(11) **EP 0 711 904 B1**
(45) Date of publication and mention of the grant of the patent: **02.06.1999**
(21) Application number: 95117869.8
(22) Date of filing: 13.11.1995
(51) Int. Cl.: F01L 1/16

(54) **Sliding part and a method of producing thereof**
Gleitteil und Herstellungsverfahren
Pièce de friction et méthode de fabrication

(30) Priority: 14.11.1994 JP 279006/94
(43) Date of publication of application: 15.05.1996
(73) Proprietor: SUMITOMO ELECTRIC INDUSTRIES, LTD., Osaka-shi, Osaka 541 (JP)
(72) Inventor: Yamakawa, Akira, c/o Itami Works of Sumimoto Elec., Itami-shi, Hyogo (JP); Takeuchi, Hisao, c/o Itami Works of Sumimoto Elec., Itami-shi, Hyogo (JP); Nishioka, Takao, c/o Itami Works of Sumimoto Elec., Itami-shi, Hyogo (JP); Yamagiwa, Masamichi, c/o Itami Works of Sumimoto, Itami-shi, Hyogo (JP)
(74) Representative: Grünecker, Kinkeldey, Stockmair & Schwanhäusser Anwaltssozietät

(56) References cited:
- DE-A- 4 409 491
- US-A- 4 796 576
- US-A- 4 909 198
- US-A- 5 253 418
- PATENT ABSTRACTS OF JAPAN vol. 017, no. 379 (M-1447), 16 July 1993 & JP 05 065809 A (SUMITOMO ELECTRIC IND LTD), 19 March 1993,
- PATENT ABSTRACTS OF JAPAN vol. 096, no. 001, 31 January 1996 & JP 07 233711 A (NGK SPARK PLUG CO LTD), 5 September 1995,

## Description

### BACKGROUND OF THE INVENTION

The invention provides method for producing a sliding part having a plurality of sliding faces, for example, a valve train part for an engine such as a cam follower or a valve, a part of a fuel injection pump, or a bearing.

An industrial machine has many sliding portions. In such a sliding portion, energy is lost and there occurs wear, thereby lowering the energy efficiency and shortening the life of the machine. Therefore, countermeasures including the improvement of the accuracy of a sliding face, and the development of a sliding material have been taken in order to reduce the sliding resistance and improve the durability of a sliding portion.

The most pertinent prior art is US-A-5,253,418 which discloses a tappet for an internal combustion engine which consists of a tappet main body and a ceramic seat plate brazed to the tappet main body. The tappet main body is made up of a first part made of low carbon steel and a second part made of metal. In manufacture, the first and second parts are first welded together to constitute the tappet main body, and then the ceramic seat is brazed to the tappet main body. The low carbon steel, forming the first part of the tappet main body can be hardened by carbonisation thereby making use of the heat for the brazing. The metal from the second part of the tappet main body can be hardened by making use of the heat for the brazing.

When a part in which a metal base material is joined to a ceramics sliding member is to be used, they must be joined to each other by heat at 650°C cr higher in order to ensure the reliability of the joining. In a sliding part, generally, there are two or more sliding portions. Although sliding conditions are not so severe to such a degree that ceramics must be used, such a sliding part has a sliding portion which requires a hardening treatment. When the body of a sliding part is subjected to a hardening treatment before a ceramics sliding member is jointed to the body by heating, the effect of the hardening treatment is destroyed by an influence due to the heat of the heat joining. When a metal base material which has undergone quench hardening is used, for example, the hardness is reduced by the heat joining. When a hardening treatment which is disclosed in Japanese patent publication (Kokai) No. HEI 2-55809 and uses the heat of the heat joining is conducted, there arise problems in that the hardness of a hardened portion is not stable, that it is difficult to maintain the hardness required by a sliding portion, and that the kinds of metal materials which can be used in the metal body are restricted and workability is inferior, thereby increasing the production cost.

### SUMMARY OF THE INVENTION

It is an object of the invention to manufacture a sliding part which can solve the problems of the prior art, in which two or more sliding materials of two or more kinds having excellent sliding properties are combined with the body, and which is economical and exhibits excellent properties. That is, in a sliding portion which is required to exhibit the highest sliding properties and in which ceramics is preferably used, a ceramics part is joined to the body which uses an economical metal, and an economical metal part subjected to a hardening treatment is incorporated into a portion which is not required to use ceramics but necessitates sliding properties, by a method which can maintain the effect of the hardening treatment, thereby providing a sliding part which is economical and exhibits excellent properties.

According to the invention, a sliding part is produced comprising: a sliding part body; one or more members A which are joined to the body and made of ceramics, each of the members A constituting a sliding face; and one or more members B which are attached to the body and made of a metal, each of the members B constituting a sliding face. Preferably, the members B are higher in hardness than the sliding part body, and previously subjected to a hardening treatment of an HRC of 45 or higher.

The number of each of the sliding members A and B may be one or alternatively two or more, or in other words the number is not particularly restricted. As the number of the sliding members attached to the body is further increased, the design becomes more complex and the production cost is larger. In general, therefore, each kind of the sliding members is used in a number of about two or less. In the sliding part body, a material which has sliding properties inferior to those of the sliding members but which is advantageous in formability, toughness and cost is used. A typical example of such a material is a metal material. Particularly, it is preferable to use an iron-base alloy in the view points of properties such as cost, and strength. Alternatively, aluminum, titanium, or the like may be used.

The sliding members A are preferably joined to the body by heating. As the sliding members A, particularly, ceramics which is excellent in sliding properties and heat resistance may be used. Examples of such ceramics are materials having higher strength such as aluminum oxide (Al₂O₃), zirconium oxide (ZrO₂), and silicon nitride (Si₃N₄). Particularly, Si₃N₄ ceramics exhibits excellent properties. The sliding members B are made of a metal material, and have undergone a hardening treatment. A metal material is lower in cost than ceramics, and exhibits a great effect in a sliding face having a complex shape. The kind of the metal material is determined depending on the material of the body. For example, an iron-base alloy such as high carbon steel, or alloy steel which has undergone a hardening treatment due to a surface treatment such as quenching, nitriding, or carburizing is used. The sliding members B are higher in hardness than the sliding part body. When the hardness of the sliding members B is equal to or lower than that of the body, the sliding properties are impaired so that there is no merit of incorporating the members into the body. Preferably, the sliding members B have HRC scale hardness of 45 or higher. When the sliding members B have hardness of an HRC lower than 45, the sliding members cannot exhibit sufficient sliding properties. In order to attain hardness of an HRC 45 or higher, a known heat treatment or surface treatment method may be employed. For example, sliding members of an HRC 45 or higher can be obtained by subjecting high carbon steel to quenching, nitriding, or carburization treatment. The sliding members may be attached to the body by a method other than the heat joining, so that the effectiveness of the hardening treatment is not impaired. Even in the case where heating is necessary, the heating must be conducted in such a manner that the temperature does not exceed 700°C.

The inventive manufacturing process comprises the steps of joining one or more members A made of ceramics to a sliding part body by heating at a temperature of 650°C or higher, each of the members A constituting a sliding face, and attaching one or more members B made of a metal subjected to a hardening treatment to the sliding part body at a temperature lower than 650°C by means which does not impair an effect of the hardening treatment, each of the members B constituting a sliding face.

In the above, preferably, the means which does not impair an effect of the hardening treatment of the members B is one of shrinkage fitting, caulking, welding, press fitting, and pressure welding. Even in the case where the attaching means involves heating, the attachment of the members B is conducted so that the members B after the attaching step have an HRC hardness of 45 or higher.

As the method of joining the members A, a known method such as brazing and diffusion joining may be employed. The temperature of the joining step is set to be 650°C or higher in order to enhance the reliability of the joining. When the temperature is lower than 650°C, the reliability of the joining is reduced. The upper limit of the joining temperature is not particularly defined. When the sliding part body is made of a metal material, it is preferable to conduct the joining at 1,200°C or lower.

The heat joining of the members A may be done by simultaneously joining a plurality of sliding members which are to be subjected to the heat joining, or by conducting a plurality of heat joining treatments at different joining temperatures. After the members A are joined by heating to the body, the members B are attached to the body. The members B have undergone a hardening treatment such as a heat treatment. When heat joining at a temperature higher than 650°C is conducted, the hardening treatment is made ineffective. Therefore, it is avoided as far as possible to use a heating treatment in the step of attaching the members B. However, a heating treatment at a temperature which does not impair the effectiveness of the hardening treatment may be used. Even in the case where also a heating treatment is conjointly used, preferably, it is required to keep the temperature not exceeding 650°C.

In an example of a method of attaching the members B to the body, the body is first heated, and the members B are then attached to thermally expanded portions by shrinkage fitting, caulking, or press fitting. Alternatively, welding, or pressure welding may be employed. In any method, the hardness of the members B must be maintained to an HRC of 45. When HRC is lower than 45, the sliding properties are insufficient so that the friction is increased, thereby producing a problem in durability.

### BRIEF DESCRIPTION OF THE DRAWINGS

Fig. 1 is a view illustrating an embodiment of a tappet to which the invention was applied.

Fig. 2 is a view illustrating a comparison example for the tappet of Fig. 1.

Fig. 3 is a view illustrating a rocker arm of the end pivot type to which the invention was applied.

### DETAILED DESCRIPTION OF THE PREFERRED EMBODIMENTS

Hereinafter, embodiments of the invention will be described.

### (Embodiment 1)

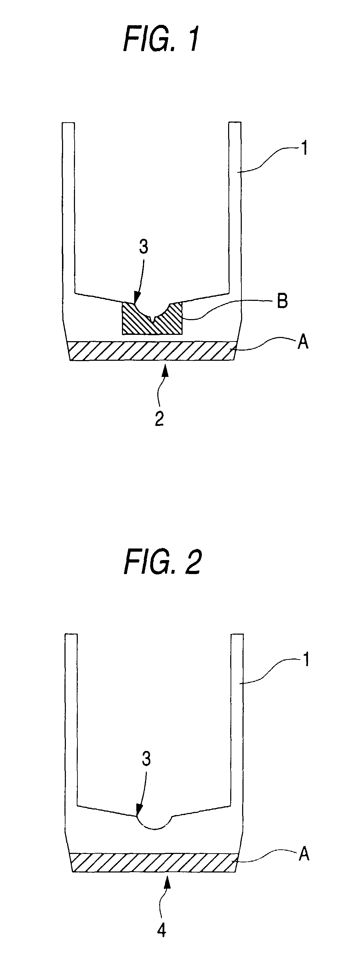

Fig. 1 shows a tappet which was produced as an example of the sliding part according to the invention. The tappet body 1 has sliding faces 2 and 3 in which the sliding conditions are severe. In order to form the sliding face 2 in accordance with the invention, a sliding member A was brazed to the tappet body, and, in order to form the sliding face 3, a sliding member B was pressingly fitted into the body. The sliding member A is an Si₃N₄ ceramics disk (outer diameter: 30 mm, thickness: 1.0 mm, and a flat portion was machined so as to have a flatness of 10 microns and a surface roughness Ra of 0.03 microns), and was brazed to the tappet body 1 (JIS SCr 420 material). The sliding member B is a member which was obtained by subjecting SKD 11 to a quenching-and-tempering treatment (HRC 59), and was incorporated with the tappet body 1 by pressingly fitted into a recess which was previously formed in the body.

As a comparison example, a tappet shown in Fig. 2 was produced. In the tappet, the sliding member B is not used, and the sliding face 3 is made of the same material as that of the tappet body 1. Also a tappet made of chilled cast iron only was used as a comparison. These tappets were assembled into an engine for a truck, and an actual vehicle traveling test was conducted with using deteriorated lubricating oil. As a result, in the tappet according to the invention, the wear of each of the sliding faces after a travel distance of 50,000 km was less than 20 microns and there arose no problem in durability. On the other hand, in the tappet of the comparison example, the wear of the sliding face 2 was less than 20 microns and there arose no problem in durability. In the sliding face 3, however, wear of 50 microns or more was produced so that the durability was insufficient. As a result, the comparison example was judged that it cannot be practically used. In the tappet made of chilled cast iron only, wear of 20 microns or more was produced in the sliding face 3, thereby producing a problem in durability.

### (Embodiment 2)

Tappets listed in Table 1 below were produced under the design of the Embodiment 1 according to the invention while changing the materials of the sliding members A and B and the methods of attaching the sliding members to the tappet body. These tappets were assembled into 4,000-cc 4-cylinder diesel engine, and then subjected to an endurance test at 1,000 r.p.m. and for 200 hours. The wear states of the sliding faces 2 and 3 after the endurance test are listed in Table 1.

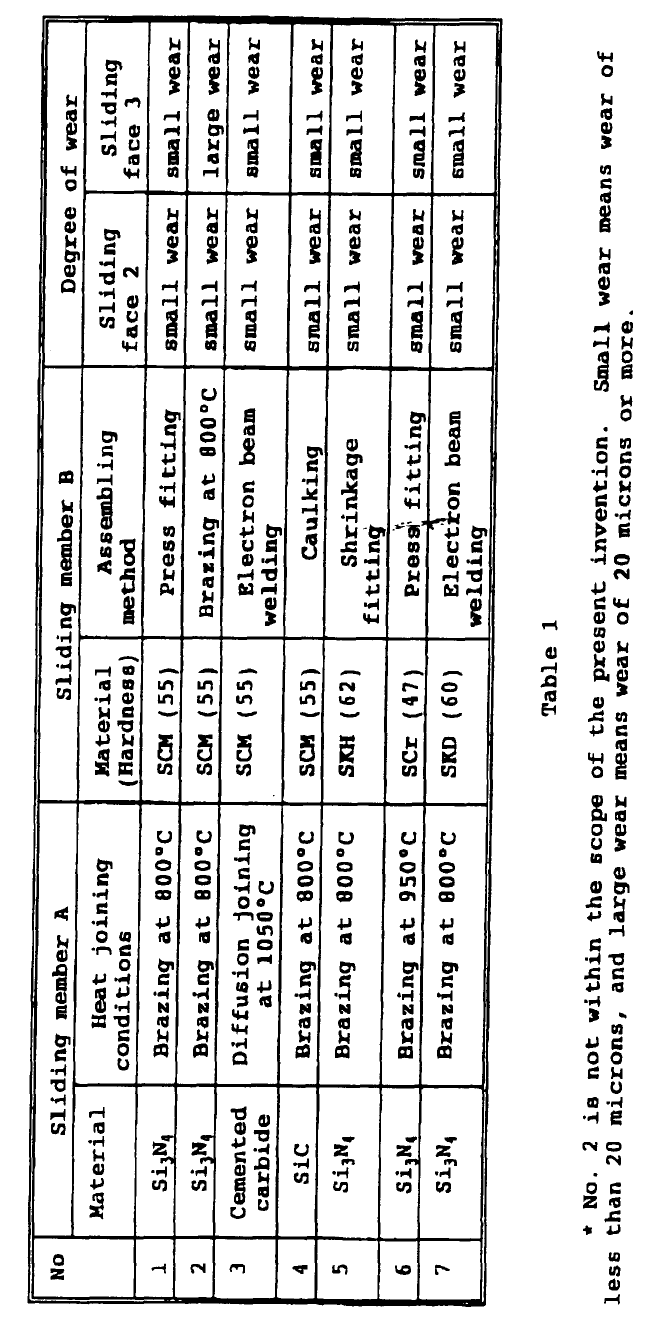

### (Embodiment 3)

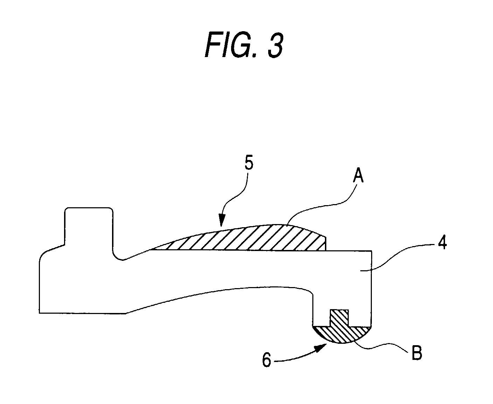

Fig. 3 shows a rocker arm of the end pivot type which was produced in accordance with the invention. The rocker arm body 4 has sliding faces 5 and 6 in which the sliding conditions are severe. In order to form the sliding face 5 in accordance with the invention, a sliding member A was brazed to the rocker arm body 4, and, in order to form the sliding face 6, a sliding member B was pressingly fitted into the body. The sliding member A is an Si₃N₄ ceramics plate having a bending strength of 1,500 MPa (about 10 mm square, thickness: 1.0 mm, and the sliding face was machined so as to have a surface roughness Ra of 0.03 microns), and was brazed to the rocker arm body 4 (JIS SCr 420 material). The sliding member B is a member which was obtained by subjecting SKD 11 to a quenching-and-tempering treatment (HRC 59), and was incorporated with the rocker arm body 4 by pressingly fitted into a recess which was previously formed in the body. Both the sliding faces 5 and 6 are excellent in wear resistance so that the life of the rocker arm in the term of travel distance were prolonged to two times that of a conventional rocker arm made of chilled cast iron.

According to the invention, a ceramics part or a hardened metal part is used only in a required portion of a sliding part, and hence a sliding part of a reduced cost can he provided. Since the metal part is subjected a hardening treatment before the metal part is attached to the sliding part body, the treatment can be conducted so that the hardness of the metal part is increased and stabilized. Furthermore, the effect of the hardening treatment is not impaired in the step of attaching the metal part. Therefore, it is not required to restrict the kind of the metal material of the sliding part body in the view point of the hardening treatment properties, so that a material which is excellent in workability can be used, thereby reducing the cost of the metal material.

## Claims

1. A method of producing a sliding part, comprising the steps of:
joining one or more first members (A) made of ceramics to a sliding part body (1) by heating at a temperature of 650°C or higher, each of said first members constituting a first sliding face (2), and;
attaching one or more second members (3) made of a metal subjected to a hardening treatment to said sliding part body(1d) at a temperature lower that 650°C by means which does not impair an effect of the hardening treatment, each of said second members constituting a second sliding face (3).

2. The method of producing a sliding part of claim 1, wherein said means which does not impair an effect of the hardening treatment of said second members is selected from a group of shrinkage fitting, caulking, welding, press fitting, and pressure welding.

3. The method of producing a sliding part of claims 1 or 2, wherein said second members (B) after said attaching step have an HRC hardness of 45 or higher.

## Patentansprüche

1. Verfahren zum Herstellen eines Gleitteiles umfassend die Schritte:
- Verbinden eines oder mehrerer erster aus Keramiken hergestellter Elemente (A) mit einem Gleitteilkörper (1) durch Erwärmen bei einer Temperatur von 650°C oder darüber, wobei diese ersten Elemente (A) eine erste Gleitfläche (2) darstellen, und;
- Anbringen eines oder mehrerer zweiter Elemente (B), die aus einem gehärteten Metall hergestellt sind, am Gleitteilkörper (1) bei einer Temperatur unterhalb von 650°C durch Mittel, die die Wirkung der Härtebehandlung nicht beeinträchtigen, wobei diese zweiten Elemente (B) eine zweite Gleitfläche (3) darstellen.

2. Verfahren zum Herstellen eines Gleitteiles nach Anspruch 1, wobei die Mittel, die die Wirkung der Härtebehandlung der zweiten Elemente (B) nicht beeinträchtigen, aus einer Gruppe bestehend aus Einsetzen einer Schrumpfpassung, Verstemmen, Schweißen, Einsetzen einer Preßpassung und Druckschweißen ausgewählt sind.

3. Verfahren zum Herstellen eines Gleitteiles nach den Ansprüchen 1 oder 2, wobei die zweiten Elemente (B) nach dem Anbringen eine Härte von HRC 45 oder darüber aufweisen.

## Revendications

1. Procédé de production d'une partie glissante, comprenant les étapes suivantes :
le raccordement d'un ou plusieurs premiers organes (A) formés d'une céramique à une partie (1) de corps de glissement par chauffage à une température supérieure ou égale à 650 °C, chacun des premiers organes constituant une première face de glissement (2), et
la fixation d'un ou plusieurs seconds organes (B) formés d'un métal soumis à un traitement de durcissement au corps (1d) de la partie glissante à une température inférieure à 650 °C par un dispositif qui ne réduit pas l'effet du traitement de durcissement, chacun des seconds organes constituant une seconde face de glissement (3).

2. Procédé de production d'une partie glissante selon la revendication 1, dans lequel le dispositif qui ne réduit pas l'effet du traitement de durcissement des seconds organes est sélectionné dans le groupe comprenant le montage par rétreinte, le sertissage, le soudage, l'emmanchement à la presse et le soudage par pression.

3. Procédé de production d'une partie glissante selon la revendication 1 ou 2, dans lequel les seconds organes (B), après l'étape de fixation, ont une dureté HRC supérieure ou égale à 45.
